# EUROPÄISCHE PATENTSCHRIFT

(11) **EP 0 804 330 B1**
(45) Veröffentlichungstag und Bekanntmachung des Hinweises auf die Patenterteilung: **02.12.1998**
(21) Anmeldenummer: 95915789.2
(22) Anmeldetag: 20.04.1995
(51) Int. Cl.: B29C 45/37, B29C 45/40

(54) **WERKZEUG ZUM FORMEN ODER SPRITZEN PLASTISCHER MASSEN UND FORMZUBEHÖR, INSBESONDERE AUSWERFEINRICHTUNG ODER KERNSTIFTEINRICHTUNG FÜR EIN DERARTIGES WERKZEUG**
TOOL FOR MOULDING OR INJECTING PLASTIC COMPOUNDS AND MOULD ACCESSORIES, ESPECIALLY EJECTOR DEVICE OR CORE PIN DEVICE FOR SUCH A TOOL
OUTIL POUR MOULER OU INJECTER DES MATIERES PLASTIQUES ET ACCESSOIRES DE MOULAGE, NOTAMMENT DISPOSITIF D'EJECTION OU DISPOSITIF A POINTE POUR NOYAU CONVENANT A CE TYPE D'OUTIL

(30) Priorität: 26.04.1994 DE 9406940 U
(43) Veröffentlichungstag der Anmeldung: 05.11.1997
(73) Patentinhaber: DME Normalien GmbH, 74196 Neuenstadt/Kocher (DE)
(72) Erfinder: WIETRZYNSKI, Bernhard, D-74177 Bad Friedrichshall (DE)
(74) Vertreter: Clemens, Gerhard, Dr.-Ing.
(86) Internationale Anmeldenummer: DE9500524
(87) Internationale Veröffentlichungsnummer: WO9529049

(56) Entgegenhaltungen:
- DE-A- 1 929 875
- DE-A- 2 427 636
- DE-A- 4 033 123
- FR-A- 2 644 610
- PATENT ABSTRACTS OF JAPAN vol. 10 no. 35 (E-380) [2092] ,12.Februar 1986 & JP,A,60 193347 (TOSHIBA) 1.Oktober 1985,
- PATENT ABSTRACTS OF JAPAN vol. 9 no. 322 (M-440) [2045] ,18.Dezember 1985 & JP,A,60 155423 (MATSUSHITA DENKO) 15.August 1985,
- PATENT ABSTRACTS OF JAPAN vol. 6 no. 89 (M-132) [967] ,27.Mai 1982 & JP,A,57 027736 (HITACHI SEISAKUSHO) 15.Februar 1982,
- KUNSTSTOFFBERATER, Bd. 28, Nr. 5, Mai 1983 ISERNHAGEN DE, Seite 14 'Für Auswerferstifte und Hülsen in Formen'

## Beschreibung

Die vorliegende Erfindung betrifft eine Formzubehöreinrichtung, nämlich Auswerfereinrichtung oder Kernstifteinrichtung für ein Werkzeug zum Formen oder Spritzen plastischer Massen, wobei die Einrichtung in dem während des Formens bzw. Spritzens der plastischen Masse zugewandten Endbereich eine Markierungseinheit aufweist.

Beim Formen oder Spritzen plastischer Massen sind die einzelnen Formen zu kennzeichnen. So muß im Kunststoffbereich in der Regel immer an der Form angegeben werden, um welches Kunststoffmaterial es sich handelt. Darüberhinaus ist es häufig wünschenswert, den Zeitpunkt der Herstellung der jeweiligen Form auf der Form selbst kenntlich zu machen.

### STAND DER TECHNIK

Zum Kenntlichmachen von aus plastischen Massen geformten Formteilen ist es bekannt, in die Wandung beispielsweise eines Spritzgießwerkzeuges einen Markierungsstempel einzubauen, der die Markierung auf die Oberfläche der Form strukturiert aufbringt. Die Markierung kann beispielsweise in einer Materialangabe oder einer Datumsangabe bestehen.

Die FR-A-2.644.610 zeigt eine Vorrichtung zum automatischen Numerieren von Spritzgußteilen. Bei dieser Vorrichtung wird über ein Formzubehörteil eine nutförmige Markierung auf das entsprechende Spritzgußteil aufgebracht. Gleichzeitig kann im Bereich neben dem Formzubehörteil am Werkzeug eine ortsfeste Markierung angebracht sein.

Die Patent Abstracts of Japan, Vol. 10, No. 35 (E-380) [2092] offenbaren ein Werkzeug, bei dem ein Auswerferstift angeordnet ist, der einen Stempelkörper aufweist, um dem Formstück eine gewisse Prägung einzuprägen. In die gleiche Richtung geht die Veröffentlichung Patent Abstracts of Japan, Vol. 9, No. 322 (M-440) [2045], bei der eine Vorrichtung zum Formen plastischer Massen angegeben ist, die einen Auswerferstift besitzt, in dessen während des Formens der plastischen Masse zugewandten Endbereich ein Stempel vorhanden ist, der Buchstaben, Figuren oder Bilder aufweist.

### DARSTELLUNG DER ERFINDUNG

Der Erfindung liegt das technische Problem bzw. die Aufgabe zugrunde, eine Formzubehöreinrichtung, nämlich Auswerfereinrichtung oder Kernstifteinrichtung, für ein Werkzeug zum Formen oder Spritzen plastischer Massen anzugeben, das vielseitig einsetzbar ist, der jeweiligen Einbaukonstellation anpaßbar ist und eine zuverlässige Markierung gewährleistet.

Die erfindungsgemäße Einrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Einrichtung für ein Werkzeug zum Formen oder Spritzen plastischer Massen zeichnet sich demgemäß dadurch aus, daß die Markierungseinheit lösbar an der Formzubehöreinrichtung befestigbar ist.

Eine besonders vorteilhafte Ausgestaltung zeichnet sich dadurch aus, daß die Markierungseinheit als Datumsstempel ausgebildet ist.

Hinsichtlich der Einstellmöglichkeiten bieten sich dieselben Möglichkeiten wie bei den bekannten separaten Datumstempeln.

Es hat sich als günstig herausgestellt, die Markierungseinheit entgegen der Wirkung eines elastischen Elementes, bevorzugt Federelementes verschiebbar auszubilden.

Eine besonders bevorzugte Ausgestaltung zeichnet sich dadurch aus, daß die Auswerfereinrichtung als Auswerferstift ausgebildet ist.

Bei einer bevorzugten Ausgestaltung der erfindungsgemäßen Formzubehöreinrichtung ist diese als Auswerferstift mit einem der plastischen Masse eingebauten Zustand zugewandten ersten Endbereich und einem dem ersten Endbereich gegenüberliegend angeordneten zweiten Endbereich vorhanden, wobei der erste Endbereich die Markierungseinheit aufweist. Wie bereits oben beschrieben kann die Markierungseinheit beispielsweise als Datumstempel ausgebildet sein.

Eine besonders bevorzugte Ausgestaltung der erfindungsgemäßen Auswerfereinrichtung oder Kernstifteinrichtung, die auch ohne Markierungseinheit eingesetzt werden kann, zeichnet sich dadurch aus, daß am zweiten Endbereich eine Kopfplatte mittels Befestigungsmitteln befestigbar ist, wobei die Länge der Aufnahmekonstruktion für das Befestigungsmittel größer gewählt ist als für die Gewährleistung einer ausreichenden Befestigung erforderlich. Durch das Vorsehen einer größeren Länge der Aufnahmekonstruktion ist es nicht mehr erforderlich, für unterschiedliche Längen unterschiedlich lange Auswerferstifte vorzusehen. Vielmehr wird eine genügend große, die üblichen Fälle abdeckende Länge gewählt, und ein derartiger Auswerferstift wird hergestellt. Wird beim Einbau ein kürzerer Auswerferstift benötigt, wird einfach ein Teil des Auswerferstiftes abgeschnitten, wobei die dann noch verbleibende Aufnahmekonstruktion für das Befestigungsmittel noch eine so große Länge aufweist, daß eine Befestigung der Kopfplatte problemlos möglich ist. Jeder Benutzer kann sich somit für den jeweiligen speziellen Einsatzfall einen Auswerferstift in der benötigten Länge herstellen. Gleiches gilt für die Kernstifteinrichtung.

Durch die erfindungsgemäße Formzubehöreinrichtung wird die Anzahl von Bauteilen für eine Werkzeugmaschine zum Formen oder Spritzen plastischer Massen reduziert, was sich günstig auf Preis, Gewicht und Volumen auswirkt. Darüberhinaus wird die Fertigungszeit zur Herstellung des Werkzeuges selbst reduziert, da der zusätzliche Einbau von Markierungsstempeln entfallen kann.

Eine bevorzugte Weiterbildung der erfindungsgemäßen Formzubehöreinrichtung zeichnet sich dadurch aus, daß die Auswerfereinrichtung und/oder Kernstifteinrichtung eine Adaptereinheit mit Markierungseinheit und eine Schafteinheit mit vorgebbarer Länge aufweist, wobei die Adaptereinheit lösbar an der Schafteinheit befestigt ist.

Weitere Ausführungsformen und Vorteile der Erfindung ergeben sich durch die in den Ansprüchen ferner aufgeführten Merkmale sowie durch die nachstehend angegebenen Ausführungsbeispiele.

Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Detailausschnitt aus einem Spritzgießwerkzeug mit einer erfindungsgemäßen Auswerfereinrichtung,
- Fig. 2: schematisch dargestellter, in seinen beiden Endbereichen geschnittener erfindungsgemäßer Auswerferstift und
- Fig. 3: schematisch dargestellter, in seinem einen Endbereich und dem Anschlußbereich geschnittener Auswerferstift mit Adaptereinheit.

### WEGE ZUM AUSFÜHREN DER ERFINDUNG

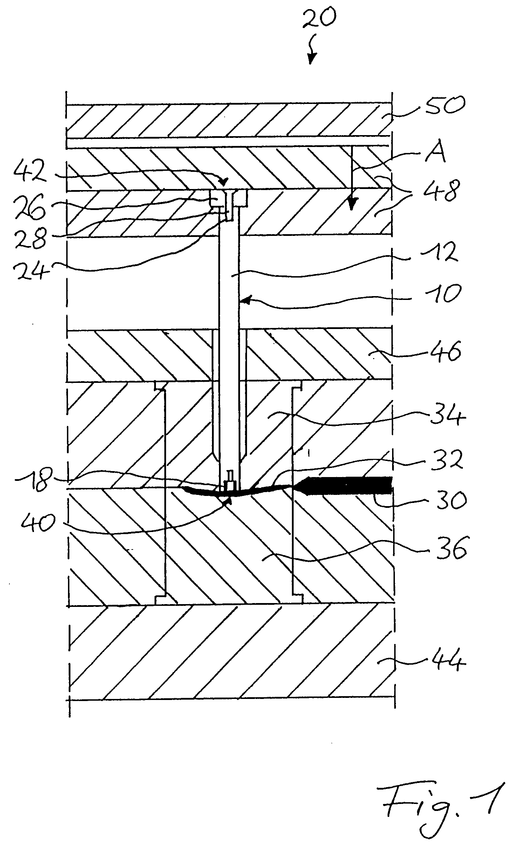

Der in Fig. 1 dargestellte Ausschnitt aus einem Spritzgießwerkzeug 20 weist eine untere Aufspannplatte 44 und eine obere Aufspannplatte 50 auf. Auf der unteren Aufspannplatte 44 ist ein unterer Werkzeugsatz 36 angeordnet, dessen Oberseite einen Teil der Außenkontur einer zu spritzenden Form 32 aufweist. Auf dem unteren Werkzeugeinsatz 36 ist ein oberer Werkzeugsatz 34 angeordnet, dessen Unterseite bereichsweise so ausgeformt ist, daß diese bereichsweise die Außenkontur der Form 32 bildet. In den Bereich zwischen dem unteren Werkzeugeinsatz und dem oberen Werkzeugeinsatz 34 wird die Form 18 über ein schematisch dargestellten Angußkanal eingespritzt. Die Angußbuchse mit dem weiteren Verlauf des Angußkanales ist in Fig. 1 nicht dargestellt.

Oberhalb des oberen Werkzeugeinsatzes 34 ist eine Zwischenplatte 46 vorhanden. Zwischen der Zwischenplatte 46 und der oberen Aufspannplatte 50 ist ein Auswerferplattenpaket 48 angeordnet, das an einen nicht dargestellten Auswerferstößel angeschlossen ist und das um den Auswerferhub A verschoben werden kann.

In dem Auswerferplattenpaket 48 ist ein Auswerferstift 10 verankert dessen Schaft 12 längsverschieblich in der Zwischenplatte 46 und dem oberen Werkzeugeinsatz 34 geführt ist.

Der untere Endbereich des Auswerferstiftes 10 befindet sich in unmittelbarer Nähe der unteren Außenkontur des oberen Werkzeugeinsatzes 34 und kommt mit der eingespritzten plastischen Masse in Kontakt.

Der Auswerferstift 10 hat die Funktion, die Spritzteil 32 nach deren Herstellung zu entformen. Nachdem die Spritzgießmasse in die Form 32 eingebracht worden ist, wird der untere Werkzeugeinsatz 36 und der obere Werkzeugeinsatz 34 auseinandergefahren. Das dann noch am oberen Werkzeugeinsatz 34 haftende Spritzteil 32 wird durch Verschiebung des Auswerferstiftes 10, verursacht durch die Verschiebebewegung des nicht dargestellten Auswerferstößels, um den Auswerferhub A von dem oberen Werkzeugeinsatz 34 gelöst.

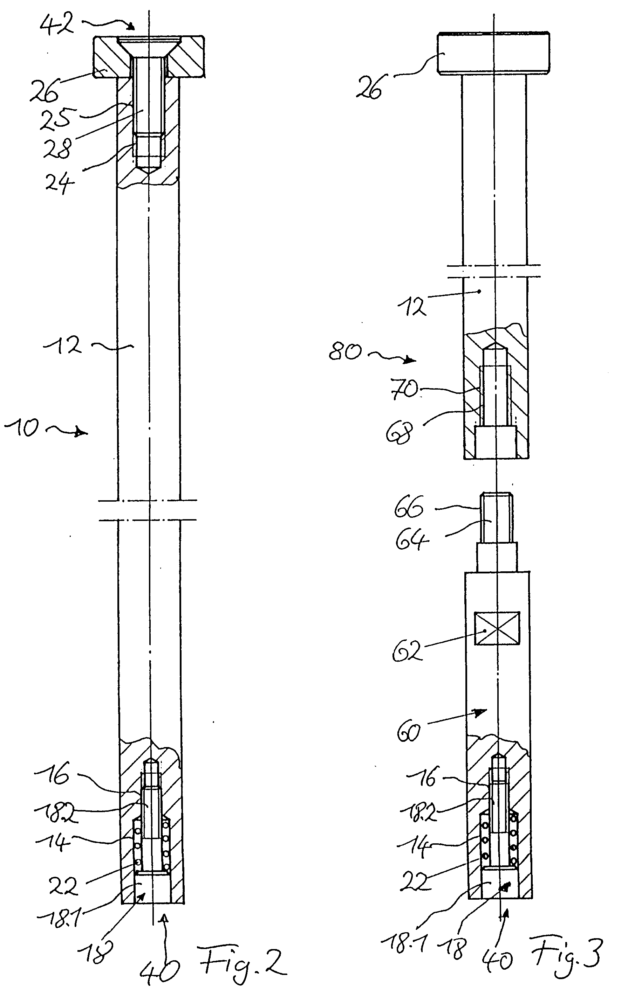

Eine erfindungsgemäße Variante des Auswerferstiftes 10 ist in Fig. 2 näher dargestellt. Der Auswerferstift 10 weist einen ersten Endbereich 40 auf, der im Bereich der Spritzgießform 32 angeordnet ist. Der gegenüberliegende zweite Endbereich 42 ist in dem Auswerferplattenpaket 48 verankert. Im ersten Endbereich ist eine Stufenbohrung 14 vorhanden, das im Bereich des kleineren Durchmessers ein Innengewinde aufweist. In der Stufenbohrung 14 ist eine Markierungseinheit, bevorzugt ein Datumstempel 18, entsprechend eingeschraubt. Der Stelleinsatz weist einen Kopfbereich 18.1, dessen Außenstirnseite die einzuprägenden Daten trägt, und einen Schaftbereich 18.2 auf. Im Bereich der Stufenbohrung 14 ist um den Schaftbereich 18.2 bereichsweise eine Druckfeder 22 angeordnet, die sich gegen den Kopfbereich 18.1 und die Stufe der Stufenbohrung 14 abstützt, so daß der Kopfbereich 18.1 elastisch nachgiebig gelagert ist.

Im zweiten Endbereich 42 ist eine Sacklochbohrung 24 mit Gewinde 25 im Schaft 12 des Auswerferstiftes 10 vorhanden. Stirnseitig wird auf den zweiten Endbereich 42 eine Kopfplatte 26 angeordnet, die mittels einer Senkschraube 28 an dem Schaft 12 befestigbar ist. Die Sacklochbohrung 24 mit ihrem Gewinde 25 weist hierbei eine Länge auf, die größer ist, als die Länge des Gewindes der Senkschraube 28. Durch die ausreichend große Wahl der Länge der Sacklochbohrung 24 mit Gewinde 25 ist es möglich, daß der Auswerferstift jeweils im Einzelfall der tatsächlich benötigten Länge angepaßt werden kann, dadurch, daß in einfacher Art und Weise der Schaft 12 im Bereich der Sacklochbohrung 24 entsprechend verkürzt wird. Dadurch ist es für den Hersteller derartiger Auswerferstifte möglich, einen Auswerferstift herzustellen und anzubieten, der auf unterschiedliche Längen anpaßbar ist.

Der in Fig. 3 schematisch dargestellte Auswerferstift 80 unterscheidet sich von dem Auswerferstift 10 gemäß Fig. 2 im wesentlichen dadurch, daß er ein lösbar an den Schaft 12 anschließbares Adapterteil 60 aufweist, an der der Stelleinsatz (Markierungsstempel) 18 lösbar befestigt ist. Gleiche Bauteile tragen das gleiche Bezugszeichen und werden nicht nochmals erläutert. Zum Anschluß an den Schaft 12 weist das Adapterteil 60 einen angeformten Schraubenbereich 64 mit Außengewinde 66 auf, das in eine am Schaft 12 entsprechend in axialer Richtung vorhandene Ausnehmung 68 mit Innengewinde 70 einschraubbar ist. Aus Gründen der besseren Handhabbarkeit weist das Adapterteil 60 eine Ausformung 62 zum Ansetzen eines Schraubenschlüssels auf. Diese Ausführungsform hat den Vorteil, daß das Adapterteil als solches mit einer einheitlichen Länge herstellbar ist und gleichzeitig durch Einsatz unterschiedlicher Bauteile mit unterschiedlichen Schaftlängen des Schaftes 12 eine Längenanpassung des gesamten Auswerferstifts 80 problemlos an das jeweilige Werkzeug ermöglicht wird.

Durch das erfindungsgemäße Vorsehen einer Markierungseinheit an einem Auswerferstift oder Kernstifteinrichtung kann auf die üblicher Weise als separates Bauteil ausgebildeten Markierungsstempel verzichtet werden. Diese darauf sich ergebende Verringerung der Bauteile für ein Werkzeug bringt deutliche wirtschaftliche Vorteile hinsichtlich Kosten und Montagezeit mit sich, wobei gleichzeitig eine zuverlässige Markierung gewährleistet werden kann.

## Patentansprüche

1. Formzubehöreinrichtung, nämlich Auswerfereinrichtung (10) oder Kernstifteinrichtung für ein Werkzeug (20) zum Formen oder Spritzen plastischer Massen (32), wobei - die Einrichtung (10) in dem während des Formens bzw. Spritzens der plastischen Masse (32) zugewandten Endbereich eine Markierungseinheit (18) aufweist,
**dadurch gekennzeichnet,** daß
- die Markierungseinheit (18) lösbar an der Formzubehöreinrichtung (10) befestigbar ist.

2. Einrichtung nach Anspruch 1,
**dadurch gekennzeichnet**, daß
- die Markierungseinheit (18) als Datumsstempel ausgebildet ist.

3. Einrichtung (10) nach Anspruch 1,
**dadurch gekennzeichnet**, daß
- ein der plastischen Masse (32) in eingebautem Zustand zugewandter erster Endbereich (40) und ein dem ersten Endbereich (40) gegenüberliegender zweiter Endbereich (42)vorhanden ist, wobei
- der erste Endbereich (40) die Markierungseinheit (18) aufweist und
- am zweiten Endbereich (42) eine Kopfplatte (26) mittels Befestigungsmitteln (28) befestigbar ist, wobei die Länge der Aufnahmekonstruktion für das Befestigungsmittel (28) größer gewählt ist als die Länge des Befestigungsmittels (28).

4. Einrichtung (10) nach Anspruch 1 und/oder 2,
**dadurch gekennzeichnet**, daß
- die Markierungseinheit (18) entgegen der Wirkung eines elastischen Elementes, bevorzugt Federelementes (22), verschiebbar vorhanden ist.

5. Einrichtung (10) nach Anspruch 3,
**dadurch gekennzeichnet**, daß
- das Befestigungsmittel als Schraube, bevorzugt Senkschraube (28), und die Aufnahmekonstruktion als Sackloch (24) mit Gewinde ausgebildet ist.

6. Einrichtung nach einem oder mehreren der Ansprüche 1 bis 5,
**dadurch gekennzeichnet**, daß
- die Auswerfereinrichtung und/oder Kernstifteinrichtung eine Adaptereinheit mit Markierungseinheit und eine Schafteinheit mit vorgebbarer Länge aufweist, wobei die Adaptereinheit lösbar an der Schafteinheit befestigt ist.

7. Werkzeug (20) zum Formen oder Spritzen plastischer Massen (32)
**dadurch gekennzeichnet**, daß
das Werkzeug (20)
- zumindest eine Formzubehöreinrichtung, nämlich eine Auswerfereinrichtung (10) und/oder eine Kernstifteinrichtung nach einem oder mehreren der Ansprüche 1 bis 6 aufweist.

## Claims

1. Mold ancillary device, specifically ejector device (10) or core pin device for a mold (20) for molding or injection-molding polymer compounds (32),
- the device (10) having a marker unit (18) in the end region which faces the polymer compound (32) during the molding or injection-molding, characterized in that
- the marker unit (18) can be fastened detachably on the mold ancillary device (10).

2. Device according to claim 1, characterized in that
- the marker unit (18) is designed as a date stamp.

3. Device (10) according to claim 1, characterized in that
- a first end region (40) facing the polymer compound (32) in the installed state and a second end region (42) opposite to the first end region (40) is [sic] present,
- the first end region (40) having the marker unit (18) and
- it being possible for a top plate (26) to be fastened to the second end region (42) with the aid of fastening means (28), the length of the receiving structure for the fastening means (28) being selected to be greater than the length of the fastening means (28).

4. Device (10) according to claim 1 and/or 2, characterized in that
- the marker unit (18) is displaceable counter to the action of an elastic element, preferably a spring element (22).

5. Device (10) according to claim 3, characterized in that
- the fastening means is designed as a screw, preferably countersunk screw (28), and the receiving structure is designed as a threaded blind hole (24).

6. Device according to one or more of claims 1 to 5, characterized in that the ejector device and/or core pin device has an adapter unit with a marker unit and a shank unit of predeterminable length, the adapter unit being fastened detachably on the shank unit.

7. Mold (20) for molding or injection-molding polymer compounds (32), characterized in that the mold (20)
- has at least one mold ancillary device, specifically an ejector device (10) and/or a core pin device according to one or more of claims 1 to 6.

## Revendications

1. Accessoire dc moulage, à savoir dispositif d'éjection (10) ou brochenoyau pour un moule (20) destiné a mouler ou à mouler par injection des matières plastiques (32), sachant que le dispostif (10) présente, dans la zone d'extrémité qui est tournée vers la matière plastique (32) pendant le moulage ou le moulage par injection, une unité de marquage (18) caractérisé en ce que l'unité de marquage (18) peut être fixée de façon amovible à l'accessoire de moulage (10).

2. Accessoire selon la revendication 1, caractérisé en ce que l'unité de marquage (18) est réalisée en tant que timbre dateur.

3. Accessoire (10) selon la revendication 1, caractérisé en ce qu'il y a une première zone d'extrémité (40) tournée vers la matière plastique (32) à l'état monté et une deuxième zone d'extrémité (42) opposée à la première zone d'extrémité (40), sachant que la première zone d'extrémité (40) présente l'unité de marquage (18), et qu'une plaque (26) peut être fixée à la deuxième zone d'extrémité (42) à l'aide de moyens de fixation (28), sachant que la longueur du réceptacle du moyen de fixation (28) est supérieure à la longueur du moyen de fixation (28).

4. Accessoire ( 10) selon la revendication 1 et/ou 2, caractérisé en ce que l'unité de marquage (18) peut être déplacée contre la force d'un élément élastique, de préférence d'un élément à ressort (22).

5. Accessoire (10) selon la revendication 3, caractérisé en ce que le moyen de fixation est réalisé en tant que vis, de préférence vis à tête fraisée (28), et le réceptacle, en tant que trou borgne (24) taraudé.

6. Accessoire selon l'une ou plusieurs des revendications 1 à 5, caractérisé en ce que le dispositif d'éjection et/ou la broche-noyau présente un adàptateur avec une unité de marquage et une tige présentant une longueur pouvant être définie au préalable, sachant que l'adaptateur est fixé de façon amovible à la tige.

7. Moule (20) pour mouler ou mouler par injection des matières plastiques (32), caractérisé en ce que le moule (20) présente au moins un accessoire de moulage, à savoir un dispositif d'éjection (10) et/ou une broche-noyau selon l'une ou plusieurs des revendications 1 à 6.
